# FASCICULE DE BREVET EUROPEEN

(11) **EP 0 592 290 B1**
(45) Date de publication et mention de la délivrance du brevet: **01.05.1996**
(21) Numéro de dépôt: 93402408.4
(22) Date de dépôt: 01.10.1993
(51) Int. Cl.: B60T 1/06, F16D 55/228

(54) **Dispositif amortisseur de vibrations pour frein à disque**
Schwingungsdämpfervorrichtung für Scheibenbremse
Vibration damper for disc brake

(30) Priorité: 06.10.1992 FR 9211818
(43) Date de publication de la demande: 13.04.1994
(73) Titulaire: HUTCHINSON, F-75008 Paris (FR)
(72) Inventeur: Domer, Michel, F-60790 Valdampierre (FR); Althabegoity, Jean, F-95700 Pannes (FR)
(74) Mandataire: Picard, Jean-Claude Georges

(56) Documents cités:
- FR-A- 1 388 942
- GB-A- 2 188 384
- US-A- 4 197 926

## Description

La présente invention concerne un dispositif amortisseur de vibrations pour frein à disque de véhicule automobile, ce frein se fixant sur des oreilles servant de points de fixation au corps du porte-pistons d'actionnement des plaquettes. Un tel frein à disque est décrit p-ex. dans le document FR-A-1,388,942.

Le problème que la présente invention vise à résoudre est celui de l'élimination des bruits de freinage engendrés par l'ensemble disque/étrier (corps du porte-pistons) et apparaissant sous la forme de crissements ou de hurlements, extrêmement désagréables, qui se produisent surtout dans certaines conditions. Ces bruits ont pour origine des vibrations dans la bande 500 à 5000 Hz, apparaissant surtout par temps sec et lorsque les plaquettes atteignent environ 100°C. Leur intensité et leur fréquence peuvent également dépendre de la pression de freinage, du régime de la roue ou d'autres paramètres.

L'invention résoud très facilement et économiquement ce problème grâce à un dispositif du type mentionné au début, caractérisé en ce qu'il comporte, en tant que moyen antivibratoire, au moins une cale de coincement agissant entre la paroi latérale dudit corps et l'une desdites oreilles de fixation.

Une telle cale supprime radicalement les vibrations susindiquées. On peut en disposer une sur chaque oreille, de part et d'autre de l'étrier ou corps du porte-pistons. Une couche d'élastomère peut être interposée entre la cale et l'étrier, pour compenser les tolérances de fabrication et éviter tout grincement à l'interface.

Dans le cas particulier d'un frein à disque de roue tirée arrière, ce disque étant associé à une coupelle de protection arquée disposée vers l'intérieur et dont les extrémités sont fixées à des oreilles du bras tiré, il est avantageux de prévoir en outre que lesdites cales sont fixées sur lesdites oreilles par les mêmes moyens de fixation que ceux qui servent à fixer ladite coupelle de protection sur ces oreilles. Cela évite d'avoir à utiliser un moyen de fixation supplémentaire.

Dans le dessin ci-annexé :

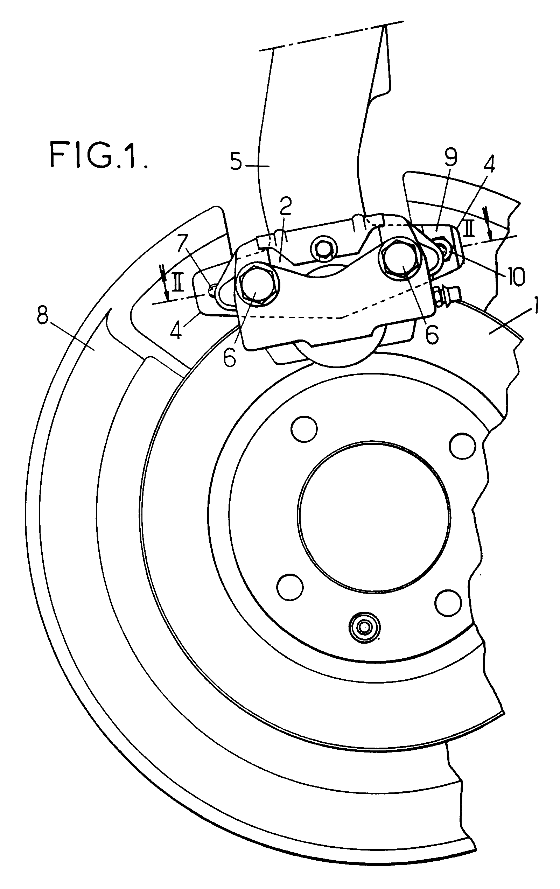

- la figure 1 est une vue partielle de face montrant la coupelle de protection, le disque et le système de freinage à plaquettes d'une roue tirée arrière de véhicule automobile ;
- la figure 2 est une vue en coupe partielle par la ligne II-II de la figure 1 ; et
- la figure 3 montre une variante de cale utilisable selon l'invention.

Sur les figures, le disque est référencé en 1, les plaquettes de freinage en 2, et l'étrier ou corps des pistons de freinage en 3 ; les deux parties de l'étrier sont reliées entre elles et fixées sur les oreilles 4 d'un bras tiré 5 par deux boulons référencés en 6.

En 7 on a représenté deux vis permettant d'assurer la fixation, sur lesdites oreilles 4, des extrémités de la coupelle de protection en tôle nervurée 8.

Ceci étant, les bruits de freinage engendrés par le disque 1 et son système de freinage sont stoppés grâce à des cales 9 serrées sur les vis 7 par des écrous 10 et coincées latéralement, de part et d'autre, sur l'étrier 3. Une couche d'élastomère 11 est adhérisée sur chaque cale et s'interpose entre celle-ci et l'étrier.

Les moyens offerts par l'invention sont parfaitement efficaces et présentent en outre l'avantage d'être extrêmement simples et économiques, sans nécessiter aucune modification des pièces existantes.

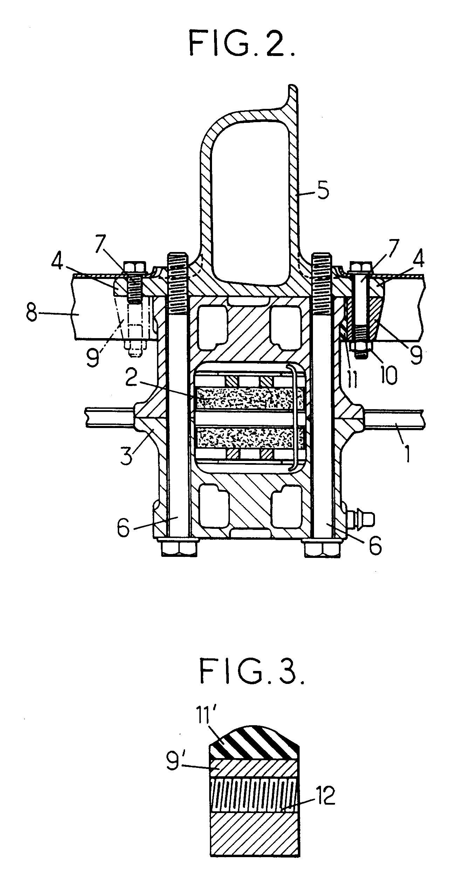

Etant donné que le problème peut être résolu, au moins dans certains cas, avec une seule cale 9, on a représenté la deuxième cale, facultative, en traits mixtes sur la figure 2.

A la figure 3 on a représenté une autre forme de cale, 9', utilisable selon l'invention. Le revêtement en élastomère adhérisé 11' possède ici la forme d'un double coin, ce qui évite les erreurs de pose et assure dans tous les cas un bon coincement de la cale contre le corps 3 du porte-pistons. Cette cale peut être traversée d'un trou taraudé 12 pour la réception de la vis 7, ce qui évite d'avoir à utiliser un écrou tel que 10.

Il va de soi que l'invention peut également être utilisée à l'avant, les cales étant fixées sur des oreilles du pivot, que ces oreilles soient ou non utilisées également pour la fixation d'une tôle de protection.

## Revendications

1. Dispositif amortisseur de vibrations pour frein à disque de véhicule automobile, ce frein se fixant sur des oreilles (4) servant de points de fixation au corps (3) du porte-pistons d'actionnement des plaquettes (2), caractérisé en ce qu'il comporte, en tant que moyen antivibratoire, au moins une cale (9) de coincement agissant entre la paroi latérale dudit corps (3) et l'une desdites oreilles (4).

2. Dispositif selon la revendication 1, caractérisé en ce que l'on utilise deux cales (9), chacune fixée sur une oreille (4) et coincée latéralement de part et d'autre dudit corps (3).

3. Dispositif selon la revendication 1 ou 2, caractérisé en ce qu'une couche d'élastomère (11) est interposée entre chaque cale (9) et la paroi latérale dudit corps (3).

4. Dispositif selon l'une quelconque des revendications précédentes, en particulier pour frein à disque (1) de roue tirée arrière, le disque étant associé à une coupelle de protection arquée (8) disposée vers l'intérieur et dont les extrémités sont fixées à des oreilles (4) du bras tiré (5), caractérisé en ce que lesdites cales (9) sont fixées sur lesdites oreilles (4) par les mêmes moyens de fixation (7, 10) que ceux qui servent à fixer ladite coupelle de protection (8) sur ces oreilles (4).

## Claims

1. Vibration-damping device for a motor-vehicle disc brake, this brake being fixed on lugs (4) serving as mounting points for the body (3) piston caliper for actuating the pads (2), characterized in that it comprises, as antivibration means, at least one wedging block (9) acting between the side wall of the said body (3) and one of the said lugs (4).

2. Device according to Claim 1, characterized in that two blocks (9) are used, each block being fixed to a lug (4) and a block being wedged laterally on each side of the said body (3).

3. Device according to Claim 1 or Claim 2, characterized in that a layer of elastomer (11) is interposed between each block (9) and the side wall of the said body (3).

4. Device according to any one of the preceding claims, particularly for a disc brake (1) for a trailing rear wheel, the disc being associated with an arcuate back plate (8) which is disposed on the inner side and the ends of which are fixed to lugs (4) of the trailing arm (5), characterized in that the said blocks (9) are fixed to the said lugs (4) by the same fixing means (7, 10) which serve to fix the said back plate (8) to these lugs (4).

## Patentansprüche

1. Schwingungsdämpfervorrichtung für eine Scheibenbremse eines Kraftfahrzeugs, wobei die Bremse auf Ansätzen (4) befestigt ist, die als Befestigungspunkte an einem Gehäuse (3) des Kolbenträgers zum Betätigen der Bremsklötze (2) dienen, dadurch **gekennzeichnet**, daß sie als Schwingungsdämpfer mindestens einen Klemmkeil (9) aufweist, der zwischen der Seitenwandung des Gehäuses (3) und einem der Ansätze (4) wirkt.

2. Vorrichtung gemäß Anspruch 1, dadurch **gekennzeichnet**, daß man zwei Keile (9) verwendet, die jeweils an einem Ansatz (4) befestigt und seitlich auf beiden Seiten des Gehäuses (3) festgeklemmt sind.

3. Vorrichtung gemäß Anspruch 1 oder 2, dadurch **gekennzeichnet**, daß eine elastomere Schicht (11) zwischen jedem Keil (9) und der Seitenwandung des Gehäuses (3) vorgesehen ist.

4. Vorrichtung gemäß einem der vorhergehenden Ansprüche, insbesondere für eine Hinterrad-Scheibenbremse (1), wobei der Scheibe eine nach innen gebogene, zum Innenraum hin vorgesehene Schutzabdeckung (8) zugeordnet ist, deren Enden an den Ansätzen (4) eines Haltearms (5) befestigt sind, dadurch **gekennzeichnet**, daß die Keile (9) an den Ansätzen (4) durch dieselben Befestigungsmittel (7,10) befestigt sind, die zum Befestigen der gebogenen Schutzabdeckung (8) an Ansätzenn (4) dienen.
